# EUROPÄISCHE PATENTANMELDUNG

(11) **EP 0 914 018 A2**
(43) Veröffentlichungstag der Anmeldung: **06.05.1999**
(21) Anmeldenummer: 98440205.7
(22) Anmeldetag: 11.09.1998
(51) Int. Cl.: H04Q 11/04

(54) **Verfahren zur Durchführung interaktiver Dienste**

(30) Priorität: 14.10.1997 DE 19745305
(71) Anmelder: ALCATEL, 75088 Paris (FR)
(72) Erfinder: Banniza, Thomas Rolf, 71282 Hemmingen (DE)
(74) Vertreter: Brose, Gerhard, Dipl.-Ing.

(57) **Zusammenfassung**

Die Erfindung betrifft ein Verfahren zur Durchführung interaktiver Dienste mit den folgenden Schritten: Aufbau einer virtuellen paketorientierten Datenverbindung (RDMDM) von einem Teilnehmer (TE) zu einem Diensteanbieter (SP), Anfordern einer gewünschten Information beim Diensteanbieter durch den Teilnehmer über diese Datenverbindung, Aufbereiten der gewünschten Information beim Diensteanbieter für diesen Teilnehmer, Zusammenfassung der Information für diesen Teilnehmer mit Information für andere Teilnehmer zu einem breitbandigen paketorientierten Datenstrom beim Diensteanbieter, rundfunkartiges Verbreiten (MD, TVHE, TVCN; MD, TVTX, TVL; MD, SATBS, SATL, SAT) des breitbandigen paketorientierten Datenstroms, Empfang (TVRX1, DM; TVRX2, DM; SATRX, DM) des gesamten breitbandigen paketorientierten Datenstroms durch den Teilnehmer und Aussondern (SW, PAD) der für diesen Teilnehmer bestimmten, von ihm gewünschten Information durch den Teilnehmer, sowie ein System, eine Diensteanbieterseitige Einrichtung, eine Teilnehmerseitige Sendeeinrichtung und eine Teilnehmerseitige Empfangseinrichtung hierfür.

## Beschreibung

Die Erfindung betrifft ein Verfahren zur Durchführung interaktiver Dienste nach dem Oberbegriff des Anspruchs 1, ein System zur Durchführung interaktiver Dienste nach dem Oberbegriff des Anspruchs 2, eine Diensteanbieterseitige Einrichtung hierfür nach dem Oberbegriff des Anspruchs 3, eine Teilnehmerseitige Sendeeinrichtung hierfür nach dem Oberbegriff des Anspruchs 4 und eine Teilnehmerseitige Empfangseinrichtung hierfür nach dem Oberbegriff des Anspruchs 5.

Für den Zugang zu interaktiven Diensten werden im wesentlichen zwei verschiedene Konzepte verfolgt. Ein Konzept, dessen Umsetzung auch schon weitgehend verbreitet ist, bedient sich normaler Telefonleitungen, die mittels Modems für Datenübertragung verwendet werden. Ein anderes Konzept geht von der Verwendung eines Kabelnetzes mit Rückkanälen aus.

Eine Telefonleitung ist für solche Dienste zwar nicht grundsätzlich ungeeignet, sie ist dafür aber keineswegs optimiert. Einerseits ist sie für die Bedienhandlungen zwischen Teilnehmer und Zentrale des interaktiven Dienstes, d.h. für die Signalisierung, zumindest im zeitlichen Schnitt, weit überdimensioniert. Für den eigentlichen Informationsfluß von der Zentrale zum Teilnehmer andererseits ist die Telefonleitung weit unterdimensioniert; es kommt zu erheblichen Verzugszeiten, bis die Antworten eingetroffen sind. Ein Kabelnetz mit Rückkanälen ist dagegen in der Regel schlicht nicht vorhanden; der Aufbau eines solchen Netzes lohnt sich aber nur ab einer gewissen Mindest-Teilnehmerdichte und benötigt selbst dann eine nicht zu vernachlässigende Anlaufzeit.

Der Erfindung liegt die Aufgabe zugrunde, Bedingungen anzugeben, unter denen interaktive Dienste schnell und mit nicht zu hohem Investitionsaufwand flächendeckend unter an diese Dienste angepaßten Voraussetzungen betrieben werden können.

Diese Aufgabe wird erfindungsgemäß gelöst durch ein Verfahren nach der Lehre des Anspruchs 1, ein System nach der Lehre des Anspruchs 2, eine Diensteanbieterseitige Einrichtung nach der Lehre des Anspruchs 3, eine Teilnehmerseitige Sendeeinrichtung nach der Lehre des Anspruchs 4 und eine Teilnehmerseitige Empfangseinrichtung nach der Lehre des Anspruchs 5.

Gemäß der vorliegenden Erfindung soll also eine Datenverbindung zwischen je einem Teilnehmer und der Zentrale und ein rundfunkartiger breitbandiger Datenstrom zur Übertragung der Informationen von der Zentrale an eine Vielzahl von Teilnehmern verwendet werden. Als Träger für den rundfunkartigen breitbandigen Datenstrom kann ein Fernsehkanal verwendet werden, der beispielsweise in einem bestehenden Fernsehverteilnetz mit übertragen wird.

Weitere Ausgestaltungen der Erfindung sind den Unteransprüchen und der nachfolgenden Beschreibung zu entnehmen. Insbesondere ist zumindest während einer Einführungsphase als Datenverbindung eine Datenfunkverbindung vorgesehen, die zunächst mit verhältnismäßig geringem Aufwand aufgebaut werden kann und später gegebenenfalls in ein Kabelnetz mit Rückkanaleigenschaft übernommen werden kann.

Im folgenden wird die Erfindung unter Zuhilfenahme der beiliegenden Zeichnungen weiter erläutert:

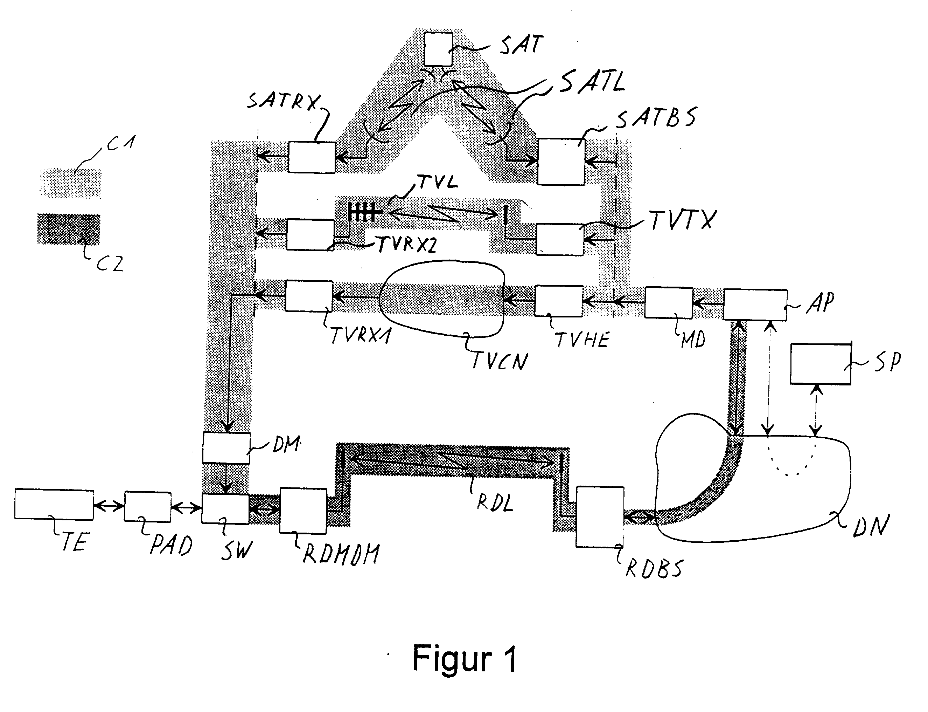

- Figur 1: zeigt ein erfindungsgemäßes System zur Durchführung eines erfindungsgemäßen Verfahrens zur Durchführung interaktiver Diesnste, mit verschiedenen erfindungsgemäßen Einrichtungen.

Anhand der Figur 1 wird zunächst der Aufbau eines erfindungsgemäßen Systems beschrieben.

Eine Teilnehmereinrichtung TE ist zunächst über eine Paketier- und Depaketiereinrichtung PAD, eine Weiche SW, ein Datenfunkmodem RDMDM, eine Datenfunkstrecke RDL, eine Datenfunkfeststation RDBS, ein Datennetz DN, eine Zugangspunkteinrichtung AP und wiederum das Datennetz DN mit einer Dienstanbietereinrichtung SP verbunden. Im gezeigten Beispiel ist diese Verbindung bidirektional. Ab der Zugangspunkteinrichtung AP besteht eine weitere, unidirektionale Verbindung zur Teilnehmereinrichtung TE über einen Modulator MD, eine Fernseh-Kopfstelle TVHE, ein Fernseh-Kabelnetz TVCN, einen ersten Fernsehempfänger TVRX1, einen Demodulator DM, die Weiche SW und die Paketier- und Depaketiereinrichtung PAD. Zwischen dem Modulator MD und dem Demodulator DM sind als Alternative oder Ergänzung noch zwei weitere unidirektionale Übertragungswege eingezeichnet, nämlich zum einen über eine Satelliten-Bodenstation SATBS, einen über zwei Satellitenstrecken SATL angebundenen Fernseh-Verteilsatelliten SAT und einen Satellitenempfänger SATRX und zum anderen über eine heute als terrestrisch bezeichnete Fernsehverbindung mit einem Fernsehsender TVTX, einer Fernseh-Funk-Übertragungsstrecke TVL und einem zweiten Fernsehempfänger TVRX2.

Soweit die Verbindungen zwischen Teilnehmereinrichtung TE und Dienstanbietereinrichtung SP getrennt verlaufen, sind sie einerseits hell unterlegt als erste Verbindung C1 und andererseits dunkel unterlegt als zweite Verbindung C2.

Der gezeigte Aufbau des Systems ist nur beispielhaft. So ist es nicht zwingend, daß die zweite Verbindung C2 mit der Datenfunkstrecke RDL bidirektional ist. Grundsätzlich genügt hier eine Verbindung von der Teilnehmereinrichtung TE in Richtung zur Dienstanbietereinrichtung SP. Nicht absolut notwendig ist auch die gerätemäßige Kombination derjenigen Teile der Teilnehmereinrichtung TE, die für das Senden zur Dienstanbietereinrichtung SP vorgesehen sind mit denjenigen Teilen, die für den Empfang von dort vorgesehen sind. Auch die Anbindung der Dienstanbietereinrichtung SP an die erste Verbindung C1 und die zweite Verbindung C2 kann beliebig anders erfolgen. Anstelle der Datenfunkstrecke RDL kann auch beispielsweise ein Kanal in einem Kabelnetz verwendet werden.

Wichtig jedenfalls ist, daß die erste Verbindung C1 eine rundfunkartige Breitbandverbindung ist, die letztlich von der Dienstanbietereinrichtung SP ausgeht, die Information für eine Vielzahl von Teilnehmern enthält und zu der jeder Teilnehmer Zugriff hat und die für ihn bestimmte Information abrufen kann. Weiter ist wichtig, daß die zweite Verbindung C2 mit einem den Teilnehmern gemeinsamen Medium arbeitet, auf das die Teilnehmer nach irgendeinem Zugriffsverfahren unabhängig voneinander zugreifen können.

Die aufgezeigten Alternativen bei der ersten Vebindung C1 zeigen nicht nur verschiedene Möglichkeiten der Realisierung auf, sie zeigen auch auf, daß nicht jeder Teilnehmer auf die gleiche Art erreicht werden muß. Im Gegensatz zu echtem (Fernseh-)Rundfunk genügt es, wenn jeder Teilnehmer die für ihn bestimmte Information auf genau einem Weg erhalten kann. Auch für die zweite Verbindung C2 können mehrere Kanäle für verschiedene Teilnehmergruppen vorgesehen sein. Dabei ist es nicht zwingend, daß alle Teilnehmer, die sich für ihre ersten Verbindungen denselben Kanal teilen, dies auch für ihre zweiten Verbindungen tun.

Auch auf Seiten des Dienstanbieters muß nicht ausgeschlossen werden, daß sich zwei oder mehr Dienstanbieter die Infrastruktur teilen und beispielsweise nur zwischen der Zugangspunkteinrichtung AP und ihren jeweiligen Dienstanbietereinrichtungen SP getrennte Übertragungswege benützen. Besonders in diesem Fall wird es sinnvoller sein, die Zugangspunkteinrichtung AP aufzutrennen in Teile für den Zugang zu den ersten Verbindungen und solche für den Zugang zu den zweiten Verbindungen. Insbesondere wird eine Aufteilung derart sinnvoll sein, daß der Zugang von und zu den einzelnen Medien durch getrennte Teile der Zugangspunkteinrichtung AP erfolgt.

Die Komponenten des Systems sind an sich grundsätzlich bekannt. So ist es grundsätzlich bekannt, von mehreren Teilnehmereinrichtungen aus über Funk virtuelle paketorientierte Datenverbindungen zu einer Zentrale zu unterhalten. Die Anbindung der Zentrale, hier der Dienstanbietereinrichtung SP, über ein Datennetz und eine Zugangspunkteinrichtung ist eine normale vermittlungstechnische Aufgabe. Auch die Anbindung der Dienstanbietereinrichtung SP an den Modulator Mod ist eine normale vermittlungstechnische Aufgabe. Die Modulation dieses Signals im Modulator MD und dessen Demodulation im Demodulator DM, wodurch die Übertragung in einem Fernsehkanal ermöglicht wird, ist eine normale übertragungstechnische Aufgabe. Die Übertragung eines Datensignals anstelle eines Fernsehsignals in einem an sich für ein Fernsehsignal vorgesehenen Kanal macht keine grundsätzlichen Probleme und ist auch schon bekannt. Die Anbindung der Teilnehmereinrichtung TE an das Datenfunkmodem RDMD und den Demodulator DM ist prinzipiell eine vermittlungstechnische Aufgabe, die ohne grundsätzliche Probleme lösbar ist. Auch die Verwendung von Paketier- und Depaketiereinrichtungen ist im Falle paketorientierter Datenübertragung bekannt.

Die Inanspruchnahme eines interaktiven Dienstes läuft nun wie folgt ab:

Ein Teilnehmer nimmt über seine Teilnehmereinrichtung TE über die zweite Verbindung C2 Kontakt mit der Dienstanbietereinrichtung SP auf. Zwischen der Dienstanbietereinrichtung SP und der Teilnehmereinrichtung TE erfolgt dann zunächst ein Datenaustausch, der der Organisation eines Auftrags dient. Hierzu gehört die Feststellung des Teilnehmers und seiner Berechtigung sowie die Auswahl und der Abruf bestimmter Informationen. Dieser Datenaustausch erfolgt bevorzugt ausschließlich über die zweite Verbindung C2, kann aber auch teils (vom Teilnehmer weg) über die zweite Verbindung C2, teils auch (zum Teilnehmer hin) über die erste Verbindung C1 erfolgen. Hierbei wird berücksichtigt, daß für Datenfunk geeignete Systeme in der Regel in beiden Richtungen gleiche Kapazität aufweisen und daß der der Organisation dienende Datenaustausch auch in der Regel in beiden Richtungen gleiche Kapazität erfodert. Die anschließende Durchführung des Auftrags, nämlich die Zusendung der gewünschten Information, erfolgt einseitig gerichtet ausschließlich über die erste Verbindung C1. Nicht ausgeschlossen werden soll hier, daß, beispielsweise zum Zwecke der Datensicherung, zusätzlich über die zweite Verbindung C2 noch ein gewisser Bestätigungsverkehr abgewickelt wird. Nach Durchführung des Auftrags kann wieder auf einen der Organisation dienenden Datenaustausch zurückgeschaltet werden.

Hier soll weder der Frage weiter nachgegangen werden, wie die Teilnehmereinrichtung ausgestaltet sein muß, um den interaktiven Dienst anzustoßen, noch um ihn weiter zu verwerten. Dies kann einerseits aus einem Programm heraus zum Abruf benötigter Daten oder weiterer Programmteile erfolgen wie andererseits rein manuell etwa zum Zwecke einer unmittelbaren audiovisuellen Darbietung für den Teilnehmer. Entspechend vielseitig kann die Ausgestaltung der Teilnehmereinrichtung sein.

## Patentansprüche

1. Verfahren zur Durchführung interaktiver Dienste, **gekennzeichnet durch** die Schritte:
• Aufbau einer virtuellen paketorientierten Datenverbindung (C2) von einem Teilnehmer (TE) zu einem Diensteanbieter (SP),
• Anfordern einer gewünschten Information beim Diensteanbieter durch den Teilnehmer über diese Datenverbindung,
• Aufbereiten der gewünschten Information beim Diensteanbieter für diesen Teilnehmer,
• Zusammenfassung der Information für diesen Teilnehmer mit Information für andere Teilnehmer zu einem breitbandigen paketorientierten Datenstrom beim Diensteanbieter,
• rundfunkartiges Verbreiten (MD, TVHE, TVCN; MD, TVTX, TVL; MD, SATBS, SATL, SAT) des breitbandigen paketorientierten Datenstroms,
• Empfang (TVRX1, DM; TVRX2, DM; SATRX, DM) des gesamten breitbandigen paketorientierten Datenstroms durch den Teilnehmer und
• Aussondern (SW, PAD) der für diesen Teilnehmer bestimmten, von ihm gewünschten Information durch den Teilnehmer.

2. System zur Durchführung interaktiver Dienste
• mit Mitteln zum Aufbau einer virtuellen paketorientierten Datenverbindung (C2) von einem Teilnehmer (TE) zu einem Diensteanbieter (SP),
• mit Mitteln zum Anfordern einer gewünschten Information beim Diensteanbieter durch den Teilnehmer über diese Datenverbindung,
• mit Mitteln zum Aufbereiten der gewünschten Information beim Diensteanbieter für diesen Teilnehmer,
• mit Mitteln zum Zusammenfassen der Information für diesen Teilnehmer mit Information für andere Teilnehmer zu einem breitbandigen paketorientierten Datenstrom beim Diensteanbieter,
• mit Mitteln zum rundfunkartigen Verbreiten (MD, TVHE, TVCN; MD, TVTX, TVL; MD, SATBS, SATL, SAT) des breitbandigen paketorientierten Datenstroms,
• mit Mitteln zum Empfang (TVRX1, DM; TVRX2, DM; SATRX, DM) des gesamten breitbandigen paketorientierten Datenstroms durch den Teilnehmer und
• mit Mitteln zum Aussondern (SW, PAD) der für diesen Teilnehmer bestimmten, von ihm gewünschten Information durch den Teilnehmer.

3. Diensteanbieterseitige Einrichtung (SP)
• mit Mitteln zum Aufbau einer virtuellen paketorientierten Datenverbindung (C1) von einem Teilnehmer (TE) zu diesem Diensteanbieter (SP),
• mit Mitteln zur Entgegennahme der Anforderung einer gewünschten Information durch den Teilnehmer bei diesem Diensteanbieter über diese Datenverbindung,
• mit Mitteln zum Aufbereiten der gewünschten Information beim Diensteanbieter für diesen Teilnehmer und
• mit Mitteln zum Zusammenfassen der Information für diesen Teilnehmer mit Information für andere Teilnehmer zu einem breitbandigen paketorientierten Datenstrom beim Diensteanbieter.

4. Teilnehmerseitige Sendeeinrichtung
• mit Mitteln (TE, PAD, SW, RDMDM) zum Aufbau einer virtuellen paketorientierten Datenverbindung von diesem Teilnehmer zu einem Diensteanbieter und
• mit Mitteln zum Anfordern einer gewünschten Information beim Diensteanbieter durch den Teilnehmer über diese Datenverbindung.

5. Teilnehmerseitige Empfangseinrichtung
• mit Mitteln zum Empfang (TVRX1, DM; TVRX2, DM; SATRX, DM) eines breitbandigen paketorientierten Datenstroms und
• mit Mitteln zum Aussondern (SW, PAD) der für diesen Teilnehmer bestimmten, von ihm gewünschten Information.

6. Verfahren nach Anspruch 1, dadurch gekennzeichnet, daß die Datenverbindung eine Datenfunkverbindung ist.

7. Teilnehmerseitige Sendeeinrichtung nach Anspruch 4, dadurch gekennzeichnet, daß sie mit einer Teilnehmerseitigen Empfangseinrichtung nach Anspruch 5 kombiniert ist.
